# EUROPÄISCHE PATENTSCHRIFT

(11) **EP 1 214 228 B1**
(45) Veröffentlichungstag und Bekanntmachung des Hinweises auf die Patenterteilung: **19.05.2004**
(21) Anmeldenummer: 00962477.6
(22) Anmeldetag: 12.09.2000
(51) Int. Cl.: B60R 21/28, B60R 21/01

(54) **GESTEUERTE ENTLÜFTUNGSVORRICHTUNG FÜR EINEN GASSACK**
CONTROLLED DEFLATION DEVICE FOR A GAS BAG
DISPOSITIF DE DEGONFLAGE COMMANDE POUR SAC A GAZ

(30) Priorität: 20.09.1999 LU 90441
(43) Veröffentlichungstag der Anmeldung: 19.06.2002
(73) Patentinhaber: IEE INTERNATIONAL ELECTRONICS & ENGINEERING S.A., 6468 Echternach (LU); DaimlerChrysler AG, 70567 Stuttgart (DE)
(72) Erfinder: SERBAN, Bogdan, L-4610 Niederkorn (LU); WITTE, Michel, L-1420 Luxembourg (LU); PETRI, Volker, 71134 Aidlingen (DE); MEYER, Michael, 71155 Alfdorf (DE); RUDOLF, Harald, 72072 Tübingen (DE)
(74) Vertreter: Beissel, Jean
(86) Internationale Anmeldenummer: PCT/EP2000/008905
(87) Internationale Veröffentlichungsnummer: WO 2001/021451

(56) Entgegenhaltungen:
- EP-A- 0 638 466
- DE-A- 19 733 599
- GB-A- 2 306 409
- US-A- 5 899 494
- US-A- 6 131 949
- PATENT ABSTRACTS OF JAPAN vol. 003, no. 084 (M-066), 20. Juli 1979 (1979-07-20) & JP 54 061727 A (HINO MOTORS LTD), 18. Mai 1979 (1979-05-18)

## Beschreibung

### Einleitung

Die vorliegende Erfindung betrifft eine Vorrichtung zum Entlüften eines Luftsacks, insbesondere zum Entlüften eines Airbags in einem aktiven Passagierrückhaltesystem eines Fahrzeugs.

Um bei einem Verkehrsunfall die Verletzungsrisiken für die Fahrzeuginsassen zu senken, werden moderne Fahrzeuge immer häufiger mit einem aktiven Passagierrückhaltesystem ausgestattet. Ein solches aktives Passagierrückhaltesystem umfaßt im allgemeinen einen oder mehrere Airbags, die bei einem Aufprall des Fahrzeugs blitzschnell aufgeblasen werden und die von dem Passagier bei dem Aufprall freigegebene Energie aufnehmen.

Da ein Airbag wie z.B. ein Frontalairbag mit sehr hohen Geschwindigkeiten (200 bis 300 km/h) aus dem Armaturenbrett bzw. dem Pralltopf des Lenkrades austritt, ist es zur Vermeidung von Verletzungen des Passagiers durch den auslösenden Airbag vorteilhaft, das vollständige Aufblasen oder Entfalten des Airbags zu unterbrechen oder zu steuern, sobald der Passagier ausreichend weit in den Airbag eingetaucht und ein ausreichender Druck in dem Airbag aufgebaut ist, um die Energie des Passagiers sicher aufnehmen zu können. Da der Zeitpunkt, an dem der Passagier ausreichend in den Airbag eingetaucht ist, sehr stark von mehreren Parametern, wie z.B. der Sitzposition des Passagiers zum Zeitpunkt des Unfalls abhängt, kann das Unterbrechen des Aufblasvorgangs des Airbags in jedem Stadium seines Auslösevorgangs notwendig werden.

Da eine auf pyrotechnischer Basis funktionierende Aufblasvorrichtung, ein sogenannter Inflator, systembedingt nicht zu jedem beliebigen Zeitpunkt in seiner Funktion unterbrochen werden kann, muß ein Passagierrückhaltesystem zum gesteuerten Abbrechen des Auslösevogangs eines Airbags infolgedessen eine Vorrichtung zum gezielten Entlüften des Airbags aufweisen. Eine solche Vorrichtung muß es erlauben, das durch den Inflator in den Airbagsack eingeblasene Gas zu jedem beliebigen Zeitpunkt abzulassen um ein weiteres Aufblasen des Airbags zu verhindern.

Aus der WO-A-98/01323 ist eine Vorrichtung bekannt, bei der der Gassack eine Entlüftungsöffnung aufweist, die an einer Sollbruchlinie verschlossen ist. Die Sollbruchlinie ist derart ausgelegt, daß sie unterhalb eines vorherbestimmten Solldrucks innerhalb des Airbags intakt bleibt und oberhalb des Solldrucks unter dem Einfluß des Drucks automatisch aufbricht. Eine solche Sollbruchlinie wird im allgemeinen durch eine sorgfältig, technisch genau dimensionierte Schwächung des verwendeten Materials erreicht. Diese Schwächung des Materials kann z.B. durch eine Perforation erfolgen, bei der kleine Einschnitte entlang der vorgesehenen Sollbruchlinie angebracht werden. In einer anderen Ausgestaltung wird die Sollbruchlinie beim Verschließen des Airbags mittels einer durch Nähen hergestellten Naht erzeugt, wobei der zum Nähen verwendete Faden und der Stichabstand genau auf die Anforderungen der Airbagauslösung abgestimmt ist. Alternativ kann die Airbaghülle auch durch Schweißen, z.B. durch Ultraschallschweißen, mit genau angepaßten Schweißmustem verschlossen werden. In diesem Fall ist die Schweißnaht die Sollbruchlinie.

Aus der EP-A-0 638 466 ist ein Airbag bekannt, bei dem bestimmte Bereiche des Airbagmaterials durch eine gezielte Schwächung des Airbagmaterials bei normalem Betriebsdruck leicht gasdurchlässig sind. Diese Bereiche, die sogenannten dynamischen Entlüftungsöffnungen, werden beispielsweise durch Perforation des Airbagmaterials mittels Laser oder mittels eines Nadelstempels erzeugt. Bei einem kritischen Gasdruck oberhalb des normalen Betriebsdrucks bewirkt das durch die dynamischen Entlüftungsöffnungen ausströmende Gas ein Schmelzen oder Verbrennen das Airbagmaterials.

Das Problem bei solchen unter dem Airbagdruck automatisch aufbrechenden Sollbruchlinien bzw. dynamischen Entlüftungsöffnungen liegt darin, daß aufgrund von Herstellungstoleranzen ein genaues Einstellen des geforderten Solldrucks an dem die Sollbruchlinie bzw. die dynamische Entlüftungsöffnung aufbricht schwer möglich ist.

Eine Lösung diese Problems findet man bei gesteuerten Entlüftungsvorrichtung.

Das Dokument US-A-5,899,494 beschreibt beispielsweise eine Airbagvorrichtung, bei der die Aufblasvorrichtung mittels eines Verteilers mit dem Airbag verbunden ist. Die Aufblasvorrichtung und der Verteiler sind in einem Gehäuse angeordnet, das an einer Seite von dem Airbag gasdicht abgeschlossen ist. Sowohl der Verteiler als auch das Gehäuse sind mit einer Deflagrationsvorrichtung versehen, die nach Ansteuerung durch einen elektrischen Impuls binnen kürzester Zeit eine Entlüftungsöffnung in den Verteiler bzw. das Gehäuse brennen kann.

Eine gattungsgemäße gesteuerte Entlüftungsvorrichtung ist ebenfalls in dem Dokument GB-A-2 306 409 beschrieben. Bei dieser Vorrichtung weist der Airbag ein Ventil auf, das durch ein elektrisches Signal gesteuert geöffnet wird. In einer ersten Ausgestaltung umfasst das Ventil eine ausgedehnte Öffnung in dem Airbagmaterial, die durch eine Verschlussscheibe aus einem aufschmelzbaren Material verschlossen ist. Die Scheibe weist eine Sollbruchstelle mit reduzierter Dicke auf, dem eine pyrotechnische Ladung beabstandet zugeordnet ist. Wird die pyrotechnische Ladung durch ein elektrisches Signal gezündet, erzeugt diese eine Flamme, die das Scheibenmaterial in dem Bereich der Sollbruchstelle durchbrennt. Anschließend reißt die Verschlussscheibe entlang der Sollbruchstelle weiter auf, so dass eine Entlüftungsöffnung größeren Ausmaßes entsteht.

In einer weiteren Ausgestaltung der Vorrichtung aus der GB-A-2 306 409, ist der Airbag zweilagig ausgeführt. Im Bereich des Ventils weist eine der Lagen eine Öffnung auf, die durch eine von der zweiten Lage gebildeten Membran verschlossen ist. Ein an dem Airbag montiertes Gehäuse enthält eine zündbare Sprengladung und einen zwischen der Sprengladung und der Membran angeordneten, mit einer Schneidkante versehenen Kolben. Durch Zündung der Sprengladung, wird der Kolben in Richtung der Membran getrieben, wobei die Schneidkante die Membran durchtrennt, so dass eine Entlüftungsöffnung in den Airbag geschnitten wird.

### Aufgabe der Erfindung

Aufgabe der vorliegenden Erfindung ist es folglich, eine andere Vorrichtung zum gezielten Entlüften eines Gassacks vorzuschlagen.

### Allgemeine Beschreibung der Erfindung

Diese Aufgabe wird erfindungsgemäß gelöst durch eine Vorrichtung zum Entlüften eines Gassacks aus einem Textilmaterial, insbesondere eines Airbags, mit mindestens einer zündbaren Sprengladung, die dem Gassack in einem Bereich derart zugeordnet ist, daß beim Zünden der Sprengladung mindestens ein Faden des Textilmaterials im Bereich der Sprengladung zerstört wird. Die Sprengladung ist hierbei unmittelbar am oder im Textilmaterial angeordnet, so dass beim Zünden der Sprengladung mindestens ein Faden des Textilmaterials direkt durch die Explosion der Sprengladung zerstört wird Durch das Zerstören mindestens eines Fadens des Textilmaterials, üblicherweise eines Gewebes oder Gewirkes, kann das Textilmaterial an der betroffenen Stelle aufreißen. Unter dem Einfluß des Gasdrucks im Inneren des Gassacks reißt das Textilmaterial an der betroffenen Stelle weiter auf, so daß eine Entlüftungsöffnung größeren Ausmaßes entsteht, durch die das in den Gassack hineinströmende Gas ausströmen kann. Hierdurch wird ein weiteres Aufblasen des Airbags wirksam unterbunden. Es ist anzumerken, daß es sich beim dem durch die Explosion zu zerstörenden Faden sowohl um einen "normalen" Faden des Textilmaterials, z.B. einen Web- oder Gestrickfaden des Airbags, als auch um einen speziell zu diesem Zweck vorgesehenen Nahtfaden einer durch eine geeignete Herstellungstechnik in dem Material des Gassacks hergestellten Verschlußnaht handeln kann. Sobald die Nahtfaser an mindestens einer Stelle durchbrochen ist, kann die Verschlußnaht bei geeigneter Ausgestaltung durch spezielle Web- bzw. Wirktechniken ohne Kraftaufwand geöffnet und so die Entlüftungsöffnung freigegeben werden. Weiterhin ist zu bemerken, daß bei einer entsprechenden Ausdehnung der Sprengladung mehrere Fäden des textilen Materials gleichzeitig zerstört werden können, so daß die Entlüftungsöffnung schnell die gewünschte Größe erreicht.

Im Gegensatz zu den bisher bekannten Vorrichtungen, wird die erfindungsgemäße Vorrichtung aktiv durch Zünden der Sprengladung ausgelöst. Dies bedeutet, daß der Entlüftungsvorgang zu jedem beliebigen Zeitpunkt exakt gesteuert ausgelöst werden kann. Die Auslösung der Entlüftungsvorrichtung kann beispielsweise durch ein Airbagsteuermodul erfolgen, nachdem eine Sensoreinrichtung eine Überschreitung eines ausreichenden Kraft- oder Druckniveaus zwischen dem Airbag und dem Passagier detektiert hat. Die Zündung der Sprengladung erfolgt vorzugsweise elektrisch, d.h. durch einen Zündimpuls bzw. einen Zündstrom, der von der Steuervorrichtung, z.B. der Airbagsteuerung, über Anschlußleitungen an die Sprengladung angelegt wird und diese auf eine Temperatur oberhalb der Zündtemperatur des Sprengstoffs erwärmt.

Ein weiterer Vorteil der erfindungsgemäßen Vorrichtung liegt darin, daß in dem Airbagmaterial keine Sollbruchstelle, d.h. keine gezielte Schwächung vorgesehen werden muß. Die mechanische Festigkeit des Airbagmaterials ist demnach vor der Auslösung der vorliegenden Vorrichtung nicht beeinträchtigt. Dies ist von besonderer Bedeutung, da der gefaltete Airbag sicher verschlossen sein muß, um ein Aufblasen im Falle eines Aufpralls zu gewährleisten. Insbesondere bei der Fertigung der Airbags und dem Einbau in das Fahrzeug, muß der Airbag den dabei auftretenden Verformungen und Belastungen gerecht werden, ohne dabei Schaden zu nehmen, der seine ordnungsgemäße Funktion über die geforderte Lebensdauer verringert könnte.

In einer ersten möglichen Ausgestaltung der Erfindung ist die Sprengladung als Sprengfaden ausgebildet, der in das Textilmaterial des Gassacks eingebracht oder auf das Textilmaterial aufgebracht ist. Ein solcher Sprengfaden umfaßt beispielsweise eine elektrisch leitende Litze, die mit einer Sprengstoffummantelung umgeben und/oder in deren Geflecht Sprengstoff eingebracht ist. Alternativ kann der Sprengfaden einen Faden aus elektrisch leitendem Sprengstoffmaterial umfassen.

Der Sprengfaden kann beispielsweise direkt bei der Fertigung des Airbagmaterials mit in das Textilmaterial mit eingewebt oder eingewirkt werden. Auf diese Weise wird der Sprengfaden ein integraler Bestandteil des Textilmaterials. Eine andere Möglichkeit des Einbringens besteht darin, den Sprengfaden nach der Herstellung des Textilmaterials in dieses einzunähen. Der Sprengfaden kann beispielsweise als Nahtfaden dienen, mit dem eine definierte Entlüftungsöffnung zugenäht wird. Im Gegensatz zum Einbringen in das Textilmaterial des Gassacks, kann der Sprengfaden ebenfalls z.B. durch Aufnähen auf das Textilmaterial aufgebracht werden.

In einer alternativen Ausgestaltung umfaßt die Sprengladung einen Glühfaden und eine Sprengstoffauflage, wobei der Glühfaden in den Gassack eingebracht oder auf den Gassack aufgebracht ist, und wobei die Sprengstoffauflage im Bereich des Glühfadens auf den Gassack aufgebracht ist. Der Glühfaden, kann nach einer der oben beschriebenen Techniken in das Textilmaterial eingebracht bzw. auf das Textilmaterial aufgebracht werden, oder er wird, z.B. mittels eines bekannten Siebdruckverfahrens, auf das Textilmaterial aufgedruckt. Anschließend wird der Sprengstoff in einem beliebigen Additivverfahren über dem Glühdraht auf das Textilmaterial aufgebracht. Wird der Glühfaden über Anschlußleitungen von einem Steuermodul mit einem Zündstrom beaufschlagt, erwärmt sich der Glühfaden und mit ihm der darüber aufgebrachte Sprengstoff auf eine Temperatur oberhalb der Zündtemperatur, so daß die Sprengladung zündet und der Airbag entlüftet wird.

Ist der auf das Textilmaterial aufzubringende Sprengstoff elektrisch leitfähig, kann gegebenenfalls auf den Glühdraht verzichtet werden. In diesem Fall weist die Sprengladung eine Sprengstoffauflage aus elektrisch leitendem Sprengstoff auf, die zwischen zwei Anschlußleitungen für die Sprengladung auf den Gassack derart aufgebracht ist, daß die Sprengstoffauflage die beiden Anschlußleitungen elektrisch kontaktiert. Bei der Beaufschlagung dieser Sprengladung mit dem Zündstrom wird die nötige Wärme zum Erhitzen des Sprengstoff in der Sprengstoffauflage selbst erzeugt.

Es bleibt anzumerken, daß alle die oben genannten Ausgestaltungen der Sprengladung einen durchgehenden elektrisch leitenden Pfad aufweisen, der an das Steuermodul angeschlossen wird. Hierdurch wird es unabhängig von der jeweiligen Ausgestaltung des Sprengladung möglich, diese während des Normalbetriebs des Fahrzeugs, das heißt bei nicht ausgelöstem Airbag, auf Funktionsfähigkeit zu überprüfen. In der Tat kann das Steuermodul durch periodisches Messen des elektrischen Widerstands des durchgehenden elektrisch leitenden Pfads die Unversehrtheit der Leiter überprüfen. Weist der gemessene Widerstandswert eine größere Abweichung zu einem vorgegebenen Referenzwert auf, kann z.B. ein Warnsignal an den Fahrer des Fahrzeugs ergehen, die Airbageinrichtung in der Werkstatt auf Defekte überprüfen zu lassen.

In einer bevorzugten Ausgestaltung der Erfindung ist die Sprengladung dem Gassack auf einer Innenseite des Gassacks zugeordnet. In diesem Fall werden die Anschlußleitungen für die Sprengladung im inneren des Airbags verlaufen und eine Beschädigung der Vorrichtung von außen ist ausgeschlossen. Die Sprengladung ist dabei vorteilhaft in einem von dem Passagier abgewandten Bereich des Gassacks angeordnet, so daß der Passagier durch die aus der entstandenen Entlüftungsöffnung ausströmenden Gas nicht angeblasen wird. Auf diese Weise kann eine Verletzung des Passagiers durch mit dem Gasstrom ausgeblasenen Partikel vermieden werden.

Es ist anzumerken, daß die Vorrichtung zum Entlüften des Airbags vorzugsweise derart ausgestaltet ist, daß die Gesamtfläche der durch die Auslösung der Vorrichtung bedingten Ventilationsöffnungen in dem Airbag größer ist als als die Gesamtfläche von Auslaßöffnungen des Airbags, die ein Entweichen des Gases nach der vollständigen Entfaltung des Airbags ermöglichen. Es sei hier daran erinnert, daß die in einem Airbag vorgesehenen Auslaßöffnungen lediglich dazu dienen, den Gasdruck in dem Airbag nach dessen vollständigem Aufblasen langsam entweichen zu lassen um ein Zusammenfallen des Airbags zu ermöglichen. Die Gesamtfläche dieser Auslaßöffnungen ist demnach nicht ausreichend, um bei noch arbeitenden Gasgeneratoren die in den Airbag einströmende Gasmenge zu evakuieren. Indem die Ventilationsöffnungen entsprechend ihrer Funktion größer ausgestaltet werden als die Auslaßöffnungen kann sichergestellt werden, daß das in den Airbag einströmende Gas nach dem Auslösen der Entlüftungsvorrichtung derart schnell entweichen kann, daß ein weiteres Aufblasen des Airbags, selbst bei noch arbeitenden Gasgeneratoren, verhindert werden kann.

Um eine Redundanz in dem System zu erreichen, sind vorteilhaft mehrere zündbare Sprengladungen in einer Parallelschaltung mit gemeinsamen Anschlußleitungen angeordnet. Die Sprengladungen können beispielsweise in Webfadenrichtung parallel zueinander angeordnet sein. Hierdurch wird vermieden, daß der Ausfall oder das Nicht-Zünden einer Ladung zu einem versagen des gesamten Systems führt. Überdies kann bei dieser Ausgestaltung ein schnelleres Öffnen der Entlüftungsöffnung erreicht werden, da bei einer Zündung der derart angeordneten Sprengladungen, das Textilmaterial gleichzeitig an mehreren Stellen zerstört wird.

Es ist anzumerken, daß es ebenfalls vorteilhaft sein kann, mehrere voneinander unabhängige Ventilationseinrichtungen an verschiedenen Stellen der Airbags vorzusehen. Neben der hierdurch bedingten Redundanz ist mit einer solchen Ausgestaltung auch eine richtungsabhängige Entlüftung möglich, indem der Airbag beispielsweise lediglich in einem dem Passagier entgegengesetzten Bereich entlüftet wird.

Die Anschlußleitungen für die zündbare Sprengladung sind beispielsweise mit einer der oben beschriebenen Techniken in den Gassack eingebracht und/oder auf den Gassack aufgebracht. Eine mögliche Herstellungsweise ist dabei das Aufdrucken der Leitungen auf das Textilmaterial. Dies kann beispielsweise in einem Siebdruckverfahren oder jedem anderen geeigneten Druckverfahren erfolgen.

Um eine definierte Ventilationsöffnung zu gestalten ist der Bereich des Gassacks, in dem die Sprengladung dem Gassack zugeordnet ist, vorzugsweise mit mindestens einer Naht umnäht. Das nach dem Zünden der Sprengladung einsetzende Aufreißen des Textilmaterials unter dem Einfluß des Gasdrucks im Inneren des Gassacks wird an der umlaufenden Naht gestoppt, so daß die entstandene Entlüftungsöffnung eine definierte Dimension aufweist. Hierdurch kann vermieden werden, daß die entstehende Öffnung sich unkontrolliert vergrößert und der Airbag infolgedessen einen zu abrupten Druckabfall erfährt.

Es ist anzumerken, daß sich die oben beschriebene Vorrichtung zum Entlüften eines Gassacks besonders zum Einsatz in einem sogenannten "intelligenten" Passagierrückhaltesystem für ein Fahrzeug eignet. Ein solches Passagierrückhaltesystem umfaßt neben der Entlüftungsvorrichtung mindestens einen Airbag mit einer Steuervorrichtung, und eine Sensoreinrichtung zum Detektieren eines durch den Airbag auf einen Passagier ausgeübten lokalen Drucks. Hierbei steuert die Steuervorrichtung die Vorrichtung zum Entlüften des Gassacks anhand eines von der Sensoreinrichtung ermittelten Drucksignals beim Überschreiten eines vorbestimmten Schwellwertes an und löst diese aus. Die Steuervorrichtung wertet hierzu das Positionssignal der Sensoreinrichtung beispielsweise nach Druck und/oder Zeit aus, d.h. nach dem lokalen Druck den der Airbag auf den Passagier ausübt und/oder der Zeit, während der dieser Druck auf den Passagier einwirkt.

In einer besonders vorteilhaften Ausgestaltung weist das Passagierrückhaltesystem mehrere Vorrichtungen zum Entlüften eines Gassacks auf, die dem Airbag in verschiedenen Bereichen zugeordnet sind, und die Sensoreinrichtung detektiert zusätzlich die Position eines Auftreffbereichs auf dem Airbag, an dem der Airbag einen lokalen Druck auf den Passagier ausübt. Die Steuervorrichtung steuert in diesem Fall, anhand eines von der Sensoreinrichtung ermittelten Positionssignals, vorzugsweise diejenige der Vorrichtungen zum Entlüften des Gassacks an, welche dem Auftreffbereich bezüglich des Airbags im wesentlichen gegenüberliegt. Eine solche Ausgestaltung ermöglicht beispielsweise eine richtungsabhängige Entlüftung, indem der Airbag lediglich in einem dem Passagier entgegengesetzten Bereich entlüftet wird.

In einer vorteilhaften Ausgestaltung weist die Sensoreinrichtung mindestens einen Sensor auf, der auf dem Airbag in einem Bereich angeordnet ist, der beim Auslösen des Airbags dem Passagier zugewandt ist. Bei dem Sensor kann es sich beispielsweise um einen auf dem Airbag angeordneten Kraftsensor handeln, der den von dem Airbag auf den Passagier ausgeübten Druck aufnimmt und in ein entsprechendes elektrisches Signal umwandelt. Ein solcher Kraftsensor umfaßt vorteilhaft mindestens zwei Elektrodenstrukuren, die in einem gewissen Abstand zueinander auf einem textilen Trägermaterial aufgebracht sind, und eine Schicht aus einem Halbleitermaterial, die in einem aktiven Bereich des Sensors in unmittelbarem Kontakt zu den Elektrodenstrukturen über den Elektrodenstrukturen aufgebracht ist, wobei die Schicht aus Halbleitermaterial einen inneren Widerstand aufweist, der in Abhängigkeit einer Verformung der Schicht veränderlich ist. Das textile Trägermaterial kann ein beliebiges weiches Textilmaterial umfassen. In einer besonders vorteilhaften weil einfachen Variante umfaßt das Textilmaterial das eigentliche Airbagmaterial, wobei die Elektrodenstrukturen direkt auf den Airbag aufgebracht sind.

Ein derartiger Sensor kommt ohne steife Trägerschichten aus, wie sie beispielsweise bei den gängigen Foliendrucksensoren üblich sind. Hierdurch weist der Sensor eine sehr hohe Verformbarkeit auf, so daß der Sensor ohne weiteres mit dem Airbag zusammen gefaltet werden kann. Darüber hinaus wird ein Verletzungsrisiko des Passagiers durch den Sensor aufgrund der Weichheit des Sensors weitgehend ausgeschlossen.

Es ist anzumerken, daß anstatt des Kraftsensors auch ein kapazitiver Abstandssensor mit mindestens einer auf dem Airbag angeordneten Elektrodenstruktur oder ein induktiver Abstandssensor mit mindestens einer auf dem Airbag angeordneten und mit einer Wechselspannung beaufschlagten induktiven Spule verwendet werden kann.

### Beschreibung anhand der Figuren

Im folgenden werden nun verschiedene Ausgestaltungen der Erfindung anhand der beiliegenden Figuren beschrieben. Es zeigen:
- Fig.1:: einen Ausschnitt aus einem Airbagmaterial mit Entlüftungsvorrichtung;
- Fig.2:: in einem vergrößerten Ausschnitt aus der Fig.1, die Parallelschaltung der verschiedenen Sprengladungen;
- Fig.3:: eine alternative Ausgestaltung der Parallelschaltung;
- Fig.4:: einen Schnitt durch das Airbagmaterial mit der darauf aufgebrachten Sprengladung;
- Fig.5:: eine teilweise geschnittene Ansicht des Airbagmaterial mit der darauf aufgebrachten Sprengladung;
- Fig.6:: alternative Ausgestaltung der Sprengladungen bei Verwendung eines elektrisch leitenden Sprengstoffs;
- Fig.7:: eine weitere Ausgestaltung einer Sprengladung;
- Fig.8:: einen Schnitt durch die Ausgestaltung der Fig.7;
- Fig.9:: ein Schema zur Anordnung der Entlüftungsvorrichtung auf dem Airbag.

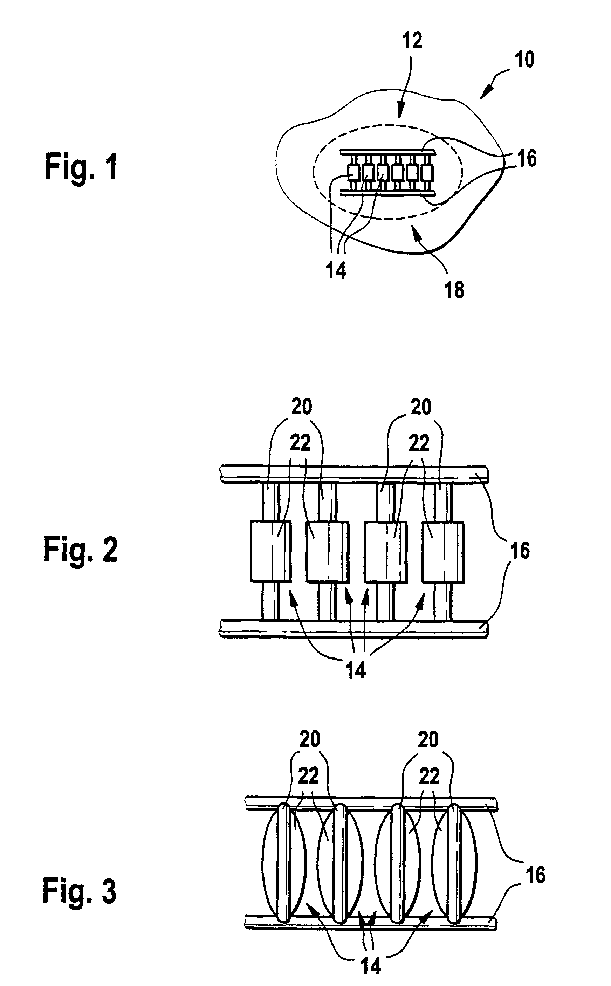

In Fig.1 ist ein Ausschnitt aus einem Airbagmaterial 10 mit einer ersten Ausgestaltung einer Entlüftungsvorrichtung 12 dargestellt. Die Entlüftungsvorrichtung 12 umfaßt mehrere elektrisch zündbare Sprengladungen 14, die durch gemeinsame Anschlußleitungen 16 parallel zueinander verschaltet sind. Über die Anschlußleitungen 16 sind die einzelnen Sprengladung mit einem (nicht gezeigten) Steuermodul, vorzugsweise dem Airbagsteuermodul, verbunden, das zum Auslösen der Vorrichtung, einen Zündstrom in die Anschlußleitungen 16 einspeist.

Die Sprengladungen 14 sind derart auf den Airbagsack aufgebracht, daß beim Zünden der Ladungen mindestens ein Faden des textilen Airbagmaterials zerstört wird. Hierdurch wird das Gewebe oder Gewirk des textilen Materials derart zerstört, daß es unter dem Einfluß eines in dem Airbag herrschenden Gasdrucks weiter aufreißt und eine Öffnung freigibt. Das Aufreißen des textilen Materials geschieht dabei in Richtung des Verlaufs des zerstörten Fadens, so daß durch geeignete Web- bzw. Wirktechniken eine bestimmte Form der Entlüftungsöffnung bewirkt werden kann.

Um die Entlüftungsöffnung in ihrer Dimension zu beschränken, d.h. um das Aufreißen des Airbagmaterials auf eine bestimmte Länge zu begrenzen, ist der Bereich in dem die Sprengladungen 14 auf dem Airbagmaterial 10 aufgebracht sind vorzugsweise mit einer Verstärkungsnaht 18 umnäht. An dieser Naht 18 wird der in dem Airbagmaterial entstehende Riß in seinem weiteren Verlauf gestoppt und somit die Größe der Entlüftungsöffnung begrenzt. Um die Sicherheit gegen ein unkontrolliertes Aufreißen weiter zu erhöhen, kann die umlaufende Naht 18 auch als Befestigungsnaht für ein weiteres Verstärkungselement dienen.

Ist die Ausbreitungsrichtung des erzeugten Risses in dem Airbagmaterial 10 klar definiert, muß der kritische Bereich im Prinzip nicht vollständig umnäht werden. In diesem Fall genügt es in der Tat zwei Verstärkungsnähte vorzusehen, die sich in dem gewünschten Abstand zueinander quer zur Ausbreitungsrichtung des Risses erstrecken. In der Praxis wird jedoch sicherheitshalber ein vollständiges Umnähen des kritischen Bereiches bevorzugt werden.

Fig. 2 und 3 zeigen, in einem vergrößerten Ausschnitt aus der Fig.1, verschiedene Ausgestaltungen der Parallelschaltung der verschiedenen Sprengladungen 14. Jede Sprengladung 14 umfaßt in der dargestellten Ausgestaltung einen Glühfaden 20, der zwischen den beiden Anschlußleitungen 16 verschaltet und mit diesen kontaktiert ist. Der Glühfaden kann in das Airbagmaterial 10 eingebracht, oder wie dargestellt auf das Material 10 aufgebracht werden. Über den Glühfaden 20 ist anschließend eine Sprengstoffauflage 22 auf das Airbagmaterial 10 und den Glühfaden 20 aufgebracht. Die Sprengstoffauflage 22 kann dabei eine seitliche Ausdehnung aufweisen, die größer als die entsprechende Ausdehnung des Glühfadens 20 ist. Hierdurch wird der zu zerstörende Faden des Airbagmaterials beim Zünden der Vorrichtung auf einer größeren Länge zerstört. Auch in der Richtung des Verlaufs des Glühfadens 20 kann durch eine geeignete Dimensionierung der Sprengstoffauflage 22 der Verlauf des Risses in der Airbaghülle beeinflußt werden. Durch eine vergrößerte Ausdehnung der Sprengstoffauflage in dieser Richtung (vgl. Fig. 3) kann die Breite des aufzusprengenden Bereiches direkt beeinflußt werden.

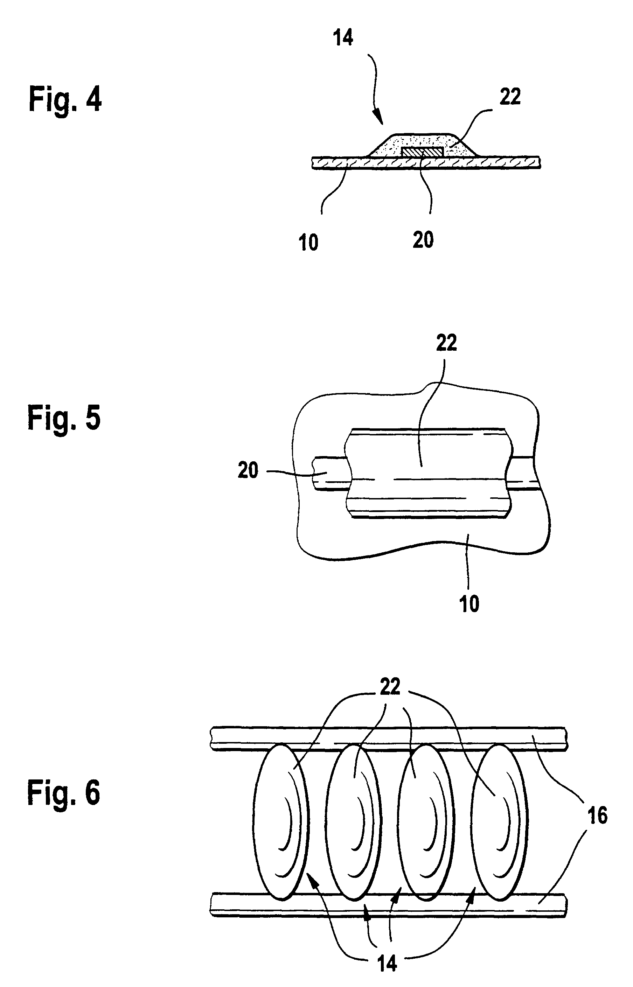

Die Fig. 4 und 5 zeigen eine mögliche Anordnung der verschiedenen Elemente der Sprengladung 14 auf dem Airbagmaterial. Der Glühdraht 20 kann beispielsweise aus Leitsilber direkt auf den Airbag aufgedruckt werden. Auf diesen Glühdraht 20 wird dann in einem Additivverfahren das Sprengstoffmaterial 22 in der gewünschten Ausdehnung aufgebracht.

Eine alternative Ausgestaltung der Sprengladungen 14 unter Verwendung eines elektrisch leitenden Sprengstoffs ist in Fig. 6 dargestellt. Bei dieser Ausgestaltung weist die Sprengladung 14 eine Sprengstoffauflage 22 aus elektrisch leitendem Sprengstoff auf, die zwischen den zwei Anschlußleitungen 16 für die Sprengladung 14 auf derart aufgebracht ist, daß die Sprengstoffauflage 22 die beiden Anschlußleitungen 16 elektrisch kontaktiert. Bei der Beaufschlagung dieser Sprengladung 14 mit dem Zündstrom wird die nötige Wärme zum Erhitzen des Sprengstoff in der Sprengstoffauflage selbst erzeugt.

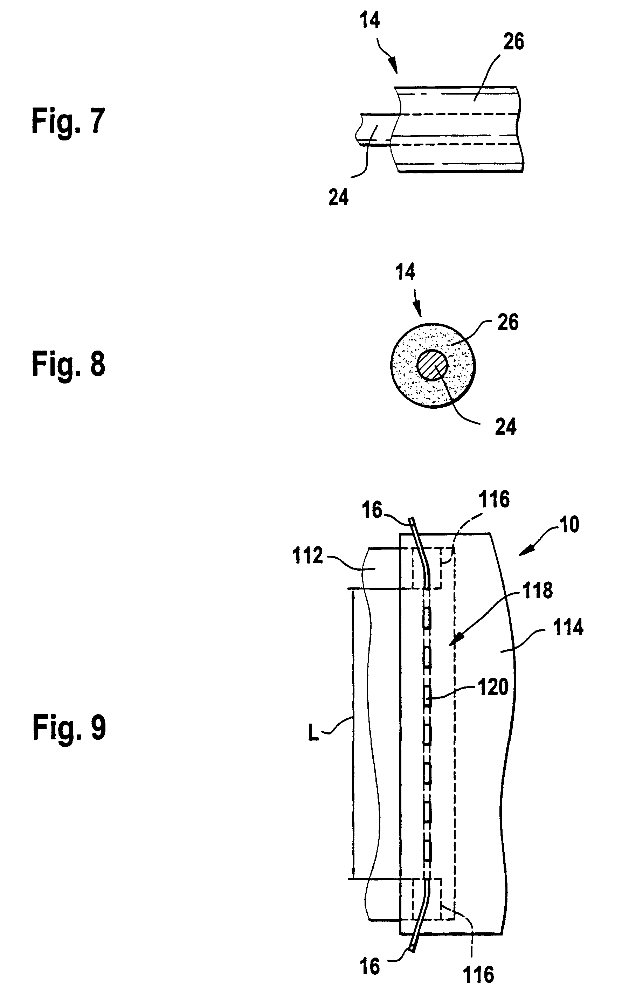

Eine vollkommen andere Ausgestaltung der Sprengladung ist in den Fig. 7 und 8 gezeigt. Bei dieser Variante ist die Sprengladung 14 als Sprengfaden ausgebildet, der in das Textilmaterial des Gassacks eingebracht oder auf das Textilmaterial aufgebracht ist. Ein solcher Sprengfaden umfaßt beispielsweise eine elektrisch leitende Litze 24, die mit einer Sprengstoffummantelung 26 umgeben ist. Alternativ kann der Sprengfaden eine Litze aufweisen, in deren Geflecht Sprengstoff eingebracht ist oder einen Faden aus elektrisch leitendem Sprengstoffmaterial umfassen.

Der Sprengfaden kann beispielsweise direkt bei der Fertigung des Airbagmaterials mit in das Textilmaterial mit eingewebt oder eingewirkt werden. Auf diese Weise wird der Sprengfaden ein integraler Bestandteil des Textilmaterials. Eine andere Möglichkeit des Einbringens besteht darin, den Sprengfaden nach der Herstellung des Textilmaterials in dieses einzunähen. Der Sprengfaden kann beispielsweise als Nahtfaden dienen, mit dem eine definierte Entlüftungsöffnung zugenäht wird. Eine derartige Einbringung des Sprengfadens ist in Fig. 9 dargestellt. Fig. 9 zeigt hierzu einen Ausschnitt aus einem Airbagsack 10, und zwar in dem Bereich, in dem zwei Teilstücke 112 und 114 des Airbags zusammengenäht sind. Die beiden Teilstücke 112 und 114 überlappen sich in dem gezeigten Bereich und sind üblicherweise durch eine einfache oder mehrreihige Naht 116 miteinander vernäht.

Zum Erzeugen einer geeigneten Entlüftungsöffnung 118, ist die normale Naht 116 bei der vorliegenden Ausgestaltung auf einer bestimmten Länge L unterbrochen. Die Länge L der Unterbrechung der Naht 116 entspricht dabei der gewünschten Länge der Entlüftungsöffnung.

Um den Airbag zu verschließen, sind die beiden Teilstücke 112 und 114 des Airbags anschließend im Bereich der Unterbrechung der normalen Naht 116 mittels eines der oben beschriebenen Sprengfäden 120 miteinander vernäht. Beim Durchleiten eines geeigneten elektrischen Stromes durch den Sprengfaden 120 wird dieser bis zu einer Temperatur oberhalb der Zündtemperatur des Sprengstoffs aufgeheizt, so daß der Sprengstoff zündet und die Naht 116 zerstört wird.

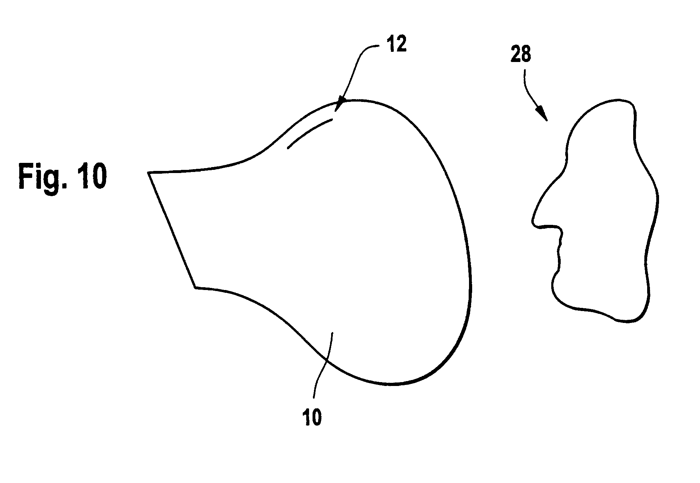

In Fig. 10 ist schematisch die Anordnung der Entlüftungsvorrichtung 12 auf dem Airbag 10 dargestellt. Die Entlüftungsvorrichtung 12 ist wie gezeigt bevorzugt in einem von dem Passagier 28 abgewandten Bereich des Gassacks angeordnet, so daß der Passagier 28 durch die aus der entstandenen Entlüftungsöffnung ausströmenden Gas nicht angeblasen wird. Auf diese Weise kann eine Verletzung des Passagiers durch mit dem Gasstrom ausgeblasenen Partikel vermieden werden.

### Referenzzeichenliste

- 10: Airbag aus Airbagmaterial
- 12: Entlüftungsvorrichtung
- 14: Sprengladungen
- 16: Anschlussleitungen
- 18: Verstärkungsnaht
- 20: Glühfaden
- 22: Sprengstoffauflage
- 24: elektrisch leitende Litze
- 26: Sprengstoffummantelung
- 28: Passagier
- 112, 114: Teilstücke des Airbags
- 116: mehrreihige Naht
- 118: Entlüftungsöffnung
- 120: Sprengfaden

## Patentansprüche

1. Vorrichtung zum Entlüften eines Gassacks aus einem Gassackmaterial, insbesondere eines Airbags, mit mindestens einer zündbaren Sprengladung, die dem Gassack in einem Bereich derart zugeordnet ist, daß beim Zünden der Sprengladung mindestens ein Teil des Gassackmaterials im Bereich der Sprengladung zerstört wird, **dadurch gekennzeichnet, dass** das Gassackmaterial ein Textilmaterial umfasst und dass die zündbare Sprengladung unmittelbar am oder im Textilmaterial angeordnet ist, so dass beim Zünden der Sprengladung mindestens ein Faden des Textilmaterials direkt durch die Explosion der Sprengladung zerstört wird.

2. Vorrichtung nach Anspruch 1, **dadurch gekennzeichnet, daß** die Sprengladung als Sprengfaden ausgebildet ist, der in das Textilmaterial des Gassacks eingebracht oder auf das Textilmaterial des Gassacks aufgebracht ist.

3. Vorrichtung nach Anspruch 2, **dadurch gekennzeichnet, daß** der Sprengfaden eine elektrisch leitende Litze umfaßt, die mit einer Sprengstoffummantelung umgeben und/oder in deren Geflecht Sprengstoff eingebracht ist.

4. Vorrichtung nach Anspruch 2, **dadurch gekennzeichnet, daß** der Sprengfaden einen Faden aus elektrisch leitendem Sprengstoffmaterial umfaßt.

5. Vorrichtung nach Anspruch 1, **dadurch gekennzeichnet, daß** die Sprengladung einen Glühfaden und eine Sprengstoffauflage umfaßt, wobei der Glühfaden in den Gassack eingebracht oder auf den Gassack aufgebracht ist, und wobei die Sprengstoffauflage im Bereich des Glühfadens auf den Gassack aufgebracht ist

6. Vorrichtung nach Anspruch 1, **dadurch gekennzeichnet, daß** die Sprengladung eine Sprengstoffauflage aus elektrisch leitendem Sprengstoff aufweist, die zwischen zwei Anschlußleitungen für die Sprengladung auf den Gassack derart aufgebracht ist, daß die Sprengstoffauflage die beiden Anschlußleitungen elektrisch kontaktiert.

7. Vorrichtung nach einem der vorhergehenden Ansprüche, **dadurch gekennzeichnet, daß** die Sprengladung dem Gassack auf einer Innenseite des Gassacks zugeordnet ist.

8. Vorrichtung nach einem der vorhergehenden Ansprüche, **dadurch gekennzeichnet, daß** mehrere zündbare Sprengladungen in einer Parallelschaltung mit gemeinsamen Anschlußleitungen angeordnet sind.

9. Vorrichtung nach einem der vorhergehenden Ansprüche, **dadurch gekennzeichnet, daß** Anschlußleitungen für die zündbare Sprengladung auf den Gassack aufgebracht und/oder in den Gassack eingebracht sind.

10. Vorrichtung nach einem der vorhergehenden Ansprüche, **dadurch gekennzeichnet, daß** der Bereich des Gassacks, in dem die Sprengladung dem Gassack zugeordnet ist mit mindestens einer Naht umnäht ist.

11. Passagierrückhaltesystem für ein Fahrzeug, umfassend
mindestens einen Airbag mit einer Steuervorrichtung,
eine Sensoreinrichtung zum Detektieren eines durch den Airbag auf einen Passagier ausgeübten Drucks, und
eine Vorrichtung zum Entlüften eines Gassacks nach einem der Ansprüche 1 bis 10,
wobei die Steuervorrichtung die Vorrichtung zum Entlüften des Gassacks anhand eines von der Sensoreinrichtung ermittelten Drucksignals beim Überschreiten eines vorbestimmten Schwellwertes ansteuert.

12. Passagierrückhaltesystem nach Anspruch 11, **dadurch gekennzeichnet, daß** die Steuervorrichtung das Drucksignal der Sensoreinrichtung nach Druck und/oder Zeit auswertet.

13. Passagierrückhaltesystem nach Anspruch 11 oder 12, wobei die Vorrichtung zum Entlüften eines Gassacks auf dem Airbag in einem Bereich angeordnet ist, der beim Auslösen des Airbags von dem Passagier abgewandt ist.

14. Passagierrückhaltesystem nach einem der Ansprüche 11 bis 13, wobei die Vorrichtung zum Entlüften des Airbags derart ausgestaltet ist, daß die Gesamtfläche der durch die Auslösung der Vorrichtung bedingten Ventilationsöffnungen in dem Airbag größer ist als die Gesamtfläche von Auslaßöffnungen des Airbags, die ein Entweichen des Gases nach der vollständigen Entfaltung des Airbags ermöglichen.

15. Passagierrückhaltesystem nach einem der Ansprüche 11 bis 14, **dadurch gekennzeichnet, daß**
mehrere Vorrichtungen zum Entlüften eines Gassacks vorgesehen sind, die dem Airbag in verschiedenen Bereichen zugeordnet sind,
die Sensoreinrichtung zusätzlich die Position eines Auftreffbereichs auf dem Airbag detektiert, an dem der Airbag einen lokalen Druck auf den Passagier ausübt, und
die Steuervorrichtung, anhand eines von der Sensoreinrichtung ermittelten Positionssignals, eine der Vorrichtungen zum Entlüften des Gassacks ansteuert, welche dem Auftreffbereich bezüglich des Airbags im wesentlichen gegenüberliegt.

16. Passagierrückhaltesystem nach einem der Ansprüche 11 bis 15, wobei die Sensoreinrichtung mindestens einen Sensor aufweist, der auf dem Airbag in einem Bereich angeordnet ist, der beim Auslösen des Airbags dem Passagier zugewandt ist.

17. Passagierrückhaltesystem nach Anspruch 16, wobei der Sensor ein auf dem Airbag angeordneter Kraftsensor ist.

18. Passagierrückhaltesystem nach Anspruch 17, **dadurch gekennzeichnet, daß** der Kraftsensor mindestens zwei Elektrodenstrukuren aufweist, die in einem gewissen Abstand zueinander auf einem textilen Trägermaterial aufgebracht sind und eine Schicht aus einem Halbleitermaterial, die in einem aktiven Bereich des Sensors in unmittelbarem Kontakt zu den Elektrodenstrukturen über den Elektrodenstrukturen aufgebracht ist, wobei die Schicht aus Halbleitermaterial einen inneren Widerstand aufweist, der in Abhängigkeit einer Verformung der Schicht veränderlich ist.

19. Passagierrückhaltesystem nach Anspruch 18, **dadurch gekennzeichnet, daß** das textile Trägermaterial das Airbagmaterial umfaßt, wobei die Elektrodenstrukturen direkt auf den Airbag aufgebracht sind.

## Claims

1. Device for venting a gas bag made of a gas bag material, especially an airbag, with at least one ignitable pyrotechnic charge which is associated to the gas bag in a region such that, when the pyrotechnic charge is ignited, at least one part of the gas bag material in the region of the pyrotechnic charge is destroyed, **characterized in that** the gas bag material comprises a textile material and that the ignitable pyrotechnic charge is arranged directly on or in the textile material, so that, when the pyrotechnic charge is ignited, at least one thread of the textile material is directly destroyed by the explosion of the pyrotechnic charge.

2. Device according to claim 1, **characterized in that** the pyrotechnic charge is formed as an explosive thread which is introduced into the textile material of the gas bag or applied onto the textile material of the gas bag.

3. Device according to claim 2, **characterized in that** the explosive thread comprises an electrically conductive stranded wire which is surrounded by an explosive casing and/or into the interweaving of which an explosive is introduced.

4. Device according to claim 2, **characterized in that** the explosive thread comprises a thread made of an electrically conductive explosive material.

5. Device according to claim 1, **characterized in that** the pyrotechnic charge comprises a filament and an explosive coating, the filament being introduced into the gas bag or applied onto the gas bag and the explosive coating being applied onto the gas bag in the region of the filament.

6. Device according to claim 1, **characterized in that** the pyrotechnic charge comprises an explosive coating made of an electrically conductive explosive which is applied between two connection lines for the pyrotechnic charge onto the gas bag such that the explosive coating electrically contacts the two connection lines.

7. Device according to one of the preceding claims, **characterized in that** the pyrotechnic charge is associated to the gas bag at an inner side of the gas bag.

8. Device according to one of the preceding claims, **characterized in that** several ignitable pyrotechnic charges are arranged in a parallel connection with common connection lines.

9. Device according to one of the preceding claims, **characterized in that** connection lines for the ignitable pyrotechnic charge are applied onto the gas bag and/or introduced into the gas bag.

10. Device according to one of the preceding claims, **characterized in that** the region of the gas bag in which the pyrotechnic charge is associated to the gas bag is circumscribed by at least one seam.

11. Passenger restraint system for a vehicle, comprising at least one airbag with a control device, a sensor means for detecting a pressure exterted on the passenger by the airbag, and a device for venting a gas bag according to one of claims 1 to 10, the control device activating the device for venting the gas bag based on a pressure signal detected by the sensor means when a predetermined threshold value is exceeded.

12. Passenger restraint system according to claim 11, **characterized in that** the control device evaluates the pressure signal of the sensor means according to the pressure and/or time.

13. Passenger restraint system according to claim 11 or 12, the device for venting a gas bag being arranged on the airbag in a region which faces away from the passenger when the airbag is released.

14. Passenger restraint system according to one of claims 11 to 13, wherein the device for venting the airbag is designed such that the total area of the ventilation openings in the airbag conditioned by the triggering of the device is larger than the total area of outlet openings of the airbag which permit an escape of the gas after the complete defolding of the airbag.

15. Passenger restraint system according to one of claims 11 to 14, **characterized in that** several devices for venting a gas bag are provided, which are associated to the airbag in various regions,
the sensor means in addition detects the position of an impact region on the airbag where the airbag exerts a local pressure on the passenger and
the control device activates one of the devices for venting the gas bag based on a position signal detected by the sensor means, which is essentially opposite the impact region with respect to the airbag.

16. Passenger restraint system according to one of claims 11 to 15, wherein the sensor means comprises at least one sensor which is arranged on the airbag in a region which faces the passenger when the airbag is released.

17. Passenger restraint system according to claim 16, wherein the sensor is a force sensor arranged on the airbag.

18. Passenger restraint system according to claim 17, **characterized in that** the force sensor comprises at least two electrode structures which are applied onto a textile substrate at a certain mutual distance, and a layer of a semiconductor material which is applied over the electrode structures in an active region of the sensor in direct contact with the electrode structures, the layer made of a semiconductor material comprising an inner resistance being variable in response to a deformation of the layer.

19. Passenger restraint system according to claim 18, **characterized in that** the textile substrate comprises the airbag material, the electrode structures being directly applied onto the airbag.

## Revendications

1. Dispositif pour dégonfler un sac à gaz réalisé en une matière pour sac à gaz, et plus particulièrement un airbag, avec au moins une charge explosive allumable, laquelle est associée au sac à gaz dans une zone de manière telle que, lors de l'allumage de la charge explosive, au moins une partie de la matière pour sac à gaz est détruite dans la zone de la charge explosive, **caractérisé en ce que** la matière pour sac à gaz comprend une matière textile et **en ce que** la charge explosive allumable est située directement sur ou dans la matière textile de sorte que, lors de l'allumage de la charge explosive, au moins un fil de la matière textile est directement détruit par l'explosion de la charge explosive.

2. Dispositif selon la revendication 1, **caractérisé en ce que** la charge explosive est réalisée sous la forme d'un fil explosif inséré dans la matière textile du sac à gaz ou appliqué sur la matière textile du sac à gaz.

3. Dispositif selon la revendication 2, **caractérisé en ce que** le fil explosif comprend un cordon conducteur d'électricité, lequel est entouré d'une gaine d'explosif et/ou dans l'entrelacement duquel est déposé de l'explosif.

4. Dispositif selon la revendication 2, **caractérisé en ce que** le fil explosif comprend un fil composé d'une matière explosive conductrice d'électricité.

5. Dispositif selon la revendication 1, **caractérisé en ce que** la charge explosive comprend un filament incandescent et une couche d'explosif, le filament incandescent étant inséré dans le sac à gaz ou appliqué sur le sac à gaz et la couche d'explosif étant appliquée sur le sac à gaz dans la zone du filament incandescent.

6. Dispositif selon la revendication 1, **caractérisé en ce que** la charge explosive comporte une couche d'explosif composée d'explosif conducteur d'électricité, laquelle est appliquée sur le sac à gaz entre deux lignes de raccordement pour la charge explosive de manière telle que la couche d'explosif contacte électriquement les deux lignes de raccordement.

7. Dispositif selon l'une des revendications précédentes, **caractérisé en ce que** la charge explosive est associée au sac à gaz sur une face intérieure du sac à gaz.

8. Dispositif selon l'une des revendications précédentes, **caractérisé en ce que** plusieurs charges explosives allumables sont montées en parallèle avec des lignes de raccordement communes.

9. Dispositif selon l'une des revendications précédentes, **caractérisé en ce que** des lignes de raccordement pour la charge explosive allumable sont appliquées sur le sac à gaz et/ou insérées dans le sac à gaz.

10. Dispositif selon l'une des revendications précédentes, **caractérisé en ce que** la zone du sac à gaz dans laquelle la charge explosive est associée au sac à gaz est entourée d'au moins une couture.

11. Système de retenue de passagers dans un véhicule, comprenant
au moins un airbag avec un dispositif de commande,
un dispositif capteur pour la détection d'une pression exercée par l'airbag sur un passager et
un dispositif de dégonflage d'un sac à gaz selon l'une des revendications 1 à 10,
le dispositif de commande commandant le dispositif de dégonflage du sac à gaz à l'aide d'un signal de pression déterminé par le dispositif capteur en cas de dépassement d'une valeur seuil prédéterminée.

12. Système de retenue de passagers selon la revendication 11, **caractérisé en ce que** le dispositif de commande évalue le signal de pression du dispositif capteur selon la pression et/ou le temps.

13. Système de retenue de passagers selon la revendication 11 ou 12, le dispositif de dégonflage d'un sac à gaz étant placé sur l'airbag dans une zone opposée au passager lors du déclenchement de l'airbag.

14. Système de retenue de passagers selon l'une des revendications 11 à 13, le dispositif de dégonflage de l'airbag étant réalisé de manière telle que la surface totale des orifices de ventilation dans l'airbag, dus au déclenchement du dispositif, est supérieure à la surface totale des orifices d'échappement de l'airbag qui permettent un échappement du gaz après le déploiement complet de l'airbag.

15. Système de retenue de passagers selon l'une des revendications 11 à 14, **caractérisé en ce que**
plusieurs dispositifs de dégonflage d'un sac à gaz sont prévus, lesquels sont associés à l'airbag dans différentes zones;
le dispositif capteur détecte additionnellement la position d'une zone d'impact sur l'airbag, en laquelle l'airbag exerce une pression locale sur le passager et
le dispositif de commande, à l'aide d'un signal de position déterminé par le dispositif capteur, commande l'un des dispositifs de dégonflage du sac à gaz, lequel est sensiblement à l'opposé de la zone d'impact par rapport à l'airbag.

16. Système de retenue de passagers selon l'une des revendications 11 à 15, le dispositif capteur comportant au moins un capteur appliqué sur l'airbag dans une zone en regard du passager lors du déclenchement de l'airbag.

17. Système de retenue de passagers selon la revendication 16, le capteur étant un capteur de force placé sur l'airbag.

18. Système de retenue de passagers selon la revendication 17, **caractérisé en ce que** le capteur de force comporte au moins deux structures d'électrodes appliquées à une certaine distance l'une de l'autre sur une matière textile porteuse ainsi qu'une couche en matériau semi-conducteur, laquelle est appliquée au-dessus des structures d'électrodes dans une zone active du capteur en contact direct avec les structures d'électrodes, la couche en matériau semi-conducteur présentant une résistance interne qui varie en dépendance d'une déformation de la couche.

19. Système de retenue de passagers selon la revendication 18, **caractérisé en ce que** la matière textile porteuse comprend la matière de l'airbag, les structures d'électrodes étant directement appliquées sur l'airbag.
